# EUROPÄISCHE PATENTSCHRIFT

(11) **EP 3 303 914 B1**
(45) Veröffentlichungstag und Bekanntmachung des Hinweises auf die Patenterteilung: **20.07.2022**
(21) Anmeldenummer: 16722162.1
(22) Anmeldetag: 10.05.2016
(51) Int. Cl.: F21V 8/00, G02B 1/04

(54) **BELEUCHTUNGSVORRICHTUNG**
ILLUMINATION DEVICE
DISPOSITIF D'ÉCLAIRAGE

(30) Priorität: 03.06.2015 DE 102015210299
(43) Veröffentlichungstag der Anmeldung: 11.04.2018
(73) Patentinhaber: Bayerische Motoren Werke Aktiengesellschaft, 80809 München (DE)
(72) Erfinder: MÜLLER, Tobias, 84034 Landshut (DE); RIEDEL, Johannes, 81379 München (DE)
(86) Internationale Anmeldenummer: PCT/EP2016/060366
(87) Internationale Veröffentlichungsnummer: WO 2016/192930

(56) Entgegenhaltungen:
- EP-A1- 2 383 590
- US-A1- 2006 257 679
- US-A1- 2008 165 085
- US-A1- 2009 003 013
- US-A1- 2014 301 095

## Beschreibung

Es wird eine Beleuchtungsvorrichtung angegeben. Die Beleuchtungsvorrichtung ist erfindungsgemäß ein Fahrzeugsbauteil, beispielsweise ein Teil einer Fahrzeugkarosserie oder ein Teil einer Innenausstattung eines Fahrzeugs.

Im Stand der Technik ist es bekannt, Fahrzeugbauteile aus Faserverbundwerkstoff herzustellen, der beispielsweise Carbonfasern umfassen kann, die in eine Kunststoffmatrix eingebettet sind. Die Carbonfasern wirken als Verstärkungsfasern des Bauteils, und es kann eine Auslegung der Verstärkungen entlang der Kraftflusslinien erfolgen. Bauteile aus kohlenstofffaserverstärktem Kunststoff zeichnen sich durch eine geringe Masse und gleichzeitig hohe Steifigkeit sowie Festigkeit aus.

Neben diesen Eigenschaften weisen Fahrzeugbauteile aus Faserverbundwerkstoff gewöhnlicherweise keine weiteren Funktionen auf. Des Weiteren sind die in der Kunststoffmatrix eingebetteten Carbonfasern meistens kaum nach außen hin sichtbar, sodass beispielsweise der Aufwand hinter der Entwicklung und Fertigung solcher Fahrzeugbauteile den Kunden nur schlecht vermittelt werden kann.

Weiterhin sind Beleuchtungsvorrichtungen in anderen technischen Gebieten bekannt. Beispielsweise offenbart die Druckschrift US 2009/003013 A1 eine Vorrichtung zur Verhinderung von Geschwindigkeitsüberschreitungen, welche einen Strukturkörper mit einer konvexen Oberfläche aufweist, wobei der Strukturkörper als überwindbares bzw. zu überfahrendes Hindernis ausgebildet ist und in seinem Inneren optische Fasern aufweist, die dazu ausgebildet sind, Licht nach außen abzustrahlen. Der Gegenstand des Anspruchs 1 unterscheidet sich davon dadurch, dass die Beleuchtungsvorrichtung ein Fahrzeugbauteil ist, dadurch dass das Bauteil ein Faserverbundwerkstoffbauteil ist, das eine Vielzahl von Verstärkungsfasern, die in der Kunststoffmatrix eingebettet sind umfasst, wobei die Verstärkungsfasern Carbonfasern sind; und dadurch dass der Lichtleitkörper derart im Faserverbundwerkstoffbauteil eingebettet ist, dass er mit zumindest einer Verstärkungsfaser über wenigstens die Hälfte ihrer Länge in Berührung steht. Die Druckschrift US 2006/257679 A1 beschreibt eine optische Polymer-Folie, in welche glass-keramische oder keramische Fasern eingebettet sind. Die optische Polymer-Folie kann Teil eine LCD-Displays sein.

Es ist eine zu lösende Aufgabe zumindest einiger Ausführungsformen, eine Beleuchtungsvorrichtung anzugeben, welche neben einer Beleuchtungsfunktion auch die Vorteile von Bauteilen aus Faserverbundwerkstoff aufweist. Eine weitere Aufgabe ist es, faserverstärkte Bauteile für die Kunden besser erlebbar zu machen.

Diese Aufgaben werden durch einen Gegenstand gemäß dem unabhängigen Patentanspruch gelöst. Vorteilhafte Ausführungsformen und Weiterbildungen gehen weiterhin aus den abhängigen Patentansprüchen hervor.

Die hier beschriebene Beleuchtungsvorrichtung weist ein Faserverbundwerkstoffbauteil, zumindest eine Lichtquelle sowie zumindest einen Lichtleitkörper auf. Die Lichtquelle kann beispielsweise als Leuchtdiode ausgebildet sein. Das Faserverbundwerkstoffbauteil umfasst eine Kunststoffmatrix und eine Vielzahl von Verstärkungsfasern, die in der Kunststoffmatrix eingebettet sind. Bei den Verstärkungsfasern handelt es sich vorzugsweise um sogenannte Endlosfasern, die in der Kunststoffmatrix eingebettet sind. Die Verstärkungsfasern sind Carbonfasern.

Die Kunststoffmatrix kann z.B. einen thermoplastischen Kunststoff aufweisen oder aus einem thermoplastischen Kunststoff bestehen. Weiterhin kann die Kunststoffmatrix beispielsweise einen duroplastischen Kunststoff, beispielsweise ein Harz bzw. Kunstharz, aufweisen oder aus einem duroplastischen Kunststoff bestehen.

Der Lichtleitkörper weist wenigstens eine Lichteinleitungsfläche zur Einkopplung von aus der Lichtquelle abgestrahltem Licht sowie wenigstens eine Lichtaustrittsfläche zur Lichtauskopplung auf. Der Lichtleitkörper ist in der Kunststoffmatrix des Faserverbundwerkstoffbauteils eingebettet. Die Lichtaustrittsfläche kann beispielsweise zumindest teilweise von Material der Kunststoffmatrix bedeckt sein bzw. in direktem Kontakt mit der Kunststoffmatrix stehen. Weiterhin kann die Lichtaustrittsfläche vollständig von Material der Kunststoffmatrix bedeckt sein. Vorzugsweise ist der Lichtleitkörper in lateraler Richtung vollständig von der Kunststoffmatrix umgeben. Beispielsweise kann die Kunststoffmatrix den Lichtleitkörper entlang einer Hauptausbreitungsrichtung des Lichtleitkörpers vollständig umschließen. Das Material der Kunststoffmatrix kann hoch transparent, transparent oder opak ausgebildet sein. Die Lichtaustrittsfläche des Lichtleitkörpers erstreckt sich vorzugsweise überwiegend entlang einer Haupterstreckungsrichtung des Lichtleitkörpers.

Das Faserverbundwerkstoffbauteil für Licht, das aus der Lichtaustrittsfläche des Lichtleitkörpers ausgekoppelt wird, ist zumindest teilweise transluzent. Mit anderen Worten ist die den Lichtleitkörper umgebende Kunststoffmatrix für aus dem Lichtleitkörper ausgekoppeltes Licht zumindest teilweise lichtdurchlässig. Beispielsweise kann die Beleuchtungsvorrichtung eine Sichtoberfläche aufweisen, die durch die Kunststoffmatrix gebildet ist, und durch die aus der Lichtaustrittsfläche des Lichtleitkörpers ausgekoppeltes Licht austreten kann, sodass es von außerhalb der Beleuchtungsvorrichtung wahrgenommen werden kann. Die Lichtaustrittsfläche kann sich beispielsweise entlang einer Haupterstreckungsrichtung des Lichtleitkörpers erstrecken.

Gemäß einer weiteren Ausführungsform treten zumindest 3 % der Strahlungsenergie des in den Lichtleitkörper eingekoppelten Lichts aus der Beleuchtungsvorrichtung aus. Vorzugsweise tritt dieses Licht nach dem Austreten aus der Lichtaustrittsfläche des Lichtleitkörpers durch Material der Kunststoffmatrix hindurch bevor es die Beleuchtungsvorrichtung verlässt. Gemäß einer besonders bevorzugten Ausführungsform treten zumindest 5 % der Strahlungsenergie des in den Lichtleitkörper eingekoppelten Lichts über die Kunststoffmatrix aus der Beleuchtungsvorrichtung aus, gemäß einer weiteren bevorzugten Ausführungsform zumindest 10%.

Gemäß einer weiteren Ausführungsform weist der Lichtleitkörper Auskoppelelemente zur gezielten Auskopplung von Licht auf. Die Auskoppelelemente können beispielsweise als Streupartikel innerhalb des Lichtleitkörpers ausgebildet sein. Zusätzlich oder alternativ kann der Lichtleitkörper Auskoppelelemente aufweisen, die als Oberflächenstrukturierungen, als aufgeraute Bereiche, und/oder als Mikroprismen ausgebildet sind. Vorzugsweise sind die Auskoppelelemente derart ausgebildet, dass in den Lichtleitkörper eingekoppeltes Licht entlang der Haupterstreckungsrichtung des Lichtleitkörpers ausgekoppelt werden kann.

Gemäß einer weiteren Ausführungsform beträgt das Verhältnis von Lichtaustrittsfläche zur Lichteinleitungsfläche mindestens 10. Besonders bevorzugt beträgt das Verhältnis von Lichtaustrittsfläche zur Lichteinleitungsfläche mindestens 25.

Gemäß einer weiteren Ausführungsform ist der Lichtleitkörper als lichtleitende Faser ausgebildet. Beispielsweise kann der Lichtleitkörper als Glasfaser oder als optische Polymerfaser bzw. Kunststofffaser ausgebildet sein. Vorzugsweise wird in die lichtleitende Faser eingekoppeltes Licht zumindest teilweise radial zu einer Längsachse der lichtleitenden Faser aus der Faser ausgekoppelt. Der Lichtleitkörper kann auch mehrere lichtleitende Fasern umfassen oder aus mehreren lichtleitenden Fasern bestehen. Weiterhin ist es möglich, dass der Lichtleitkörper als lichtleitendes Faserbündel ausgebildet ist. Das lichtleitende Faserbündel kann dabei eine Vielzahl von lichtleitenden Fasern umfassen. Vorzugsweise sind die lichtleitenden Fasern als Endlosfasern ausgebildet.

Gemäß einer weiteren Ausführungsform weist der Lichtleitkörper einen Kunststoff auf oder besteht aus einem Kunststoff. Beispielsweise kann der Lichtleitkörper Polycarbonat und/oder Polymethylmethacrylat aufweisen bzw. aus Polycarbonat oder Polymethylmethacrylat bestehen. Weiterhin kann der Lichtleitkörper Glas aufweisen oder aus Glas bestehen. Prinzipiell kann der Lichtleitkörper jedoch auch andere, für optische Anwendungen geeignete Materialien, insbesondere transparente Materialien, aufweisen.

Gemäß einer weiteren Ausführungsform ist der Lichtleitkörper derart ausgebildet, dass in den Lichtleitkörper eingekoppeltes Licht zumindest teilweise seitlich abgestrahlt wird. Beispielsweise steht zumindest eine Lichtaustrittsfläche des Lichtleitkörpers senkrecht zur Lichteinleitungsfläche des Lichtleitkörpers. Der Lichtleitkörper kann z.B. als sogenannte Seitenlichtfaser, wie z.B. als polymere Seitenlichtfaser oder Seitenlichtglasfaser, ausgebildet sein.

Gemäß einer weiteren Ausführungsform ist der Lichtleitkörper derart im Faserverbundwerkstoffbauteil eingebettet, das die Oberfläche des Lichtleitkörpers zumindest abschnittsweise einen Abstand zu einer Sichtoberfläche der Beleuchtungsvorrichtung von maximal 0,5 mm, bevorzugt von maximal 0,1 mm, aufweist. Bei einer derartigen Anordnung kann als Kunststoffmatrix ein Material verwendet werden, das wenig transparent bzw. opak ist. Weiterhin ist es möglich, dass der Lichtleitkörper derart im Faserverbundwerkstoffbauteil eingebettet ist, dass die Oberfläche des Lichtleitkörpers durchgehend einen Abstand zur Sichtoberfläche von maximal 0,5 mm bzw. von maximal 0,1 mm aufweist.

Gemäß einer weiteren Ausführungsform ist der Lichtleitkörper derart im Faserverbundwerkstoffbauteil eingebettet, dass die Oberfläche des Lichtleitkörpers zumindest abschnittsweise einen Abstand zu einer Sichtoberfläche der Beleuchtungsvorrichtung von mindestens 0,1 mm, bevorzugt von mindestens 0,5 mm, aufweist. Bei einer solchen Anordnung sollte als Kunststoffmatrix ein transparentes bis sehr transparentes Material eingesetzt werden. Weiterhin kann der Lichtleitkörper derart im Faserverbundwerkstoffbauteil eingebettet sein, dass die Oberfläche des Lichtleitkörpers durchgehend einen Abstand zur Sichtoberfläche von mindestens 0,1 mm bzw. mindestens 0,5 mm aufweist.

Gemäß einer weiteren Ausführungsform ist die Lichtquelle im Faserverbundwerkstoffbauteil eingebettet. Vorzugsweise ist die Lichtquelle nahe an der Lichteinleitungsfläche des Lichtleitkörpers angeordnet, sodass möglichst viel Licht, welches aus der Lichtquelle abgestrahlt wird, in den Lichtleitkörper eingekoppelt werden kann. Beispielsweise kann die Lichtquelle mit dem Lichtleitkörper in Berührung stehen.

Gemäß einer weiteren Ausführungsform ist die Lichtquelle außerhalb des Faserverbundwerkstoffbauteils angeordnet. Beispielsweise kann die Lichteinleitungsfläche an einer Oberfläche des Faserverbundwerkstoffbauteils angeordnet sein oder zumindest oberflächennah an eine Oberfläche des Faserverbundwerkstoffbauteils angeordnet sein, sodass Licht, das aus der außerhalb des Faserverbundwerkstoffbauteils angeordneten Lichtquelle abgestrahlt wird, in den Lichtleitkörper eingekoppelt werden kann.

Erfindungsgemäß ist der Lichtleitkörper derart im Faserverbundwerkstoffbauteil eingebettet, dass er mit zumindest einer Verstärkungsfaser über wenigstens die Hälfte ihrer Länge in Berührung steht. Weiterhin ist es möglich, dass eine der Verstärkungsfasern derart im Faserverbundwerkstoffbauteil eingebettet ist, dass der Lichtleitkörper von einer Sichtoberfläche der Beleuchtungsvorrichtung aus gesehen zumindest teilweise von der Verstärkungsfaser verdeckt wird. Beispielsweise kann von der Sichtoberfläche aus gesehen zumindest die Hälfte des Lichtleitkörpers von der Verstärkungsfaser verdeckt werden. Mittels der beschriebenen Anordnungen können Verstärkungsfasern besonders eindrucksvoll nach außen hin sichtbar gemacht werden.

Gemäß einer weiteren Ausführungsform weist die Beleuchtungsvorrichtung eine Vielzahl von Lichtleitkörpern auf, die in der Kunststoffmatrix des Faserverbundwerkstoffbauteils eingebettet sind. Die verschiedenen Lichtleitkörper können beispielsweise alle als optische Fasern, wie z.B. als Glasfasern oder Polymerfasern, oder als Faserbündel ausgebildet sein. Weiterhin können die Lichtleitkörper alle als planar, flächig und/oder plattenförmig ausgebildete Körper, die beispielsweise aus Polycarbonat oder aus Polymethylmethacrylat bestehen, ausgeführt sein. Des Weiteren ist es auch möglich, dass einige der Lichtleitkörper als optische Fasern bzw. Faserbündel und einige der Lichtleitkörper als flächig ausgebildete Körper vorliegen. Beispielsweise kann jedem der Lichtleitkörper eine Lichtquelle zugeordnet sein. Alternativ ist es auch möglich, dass aus einer Lichtquelle abgestrahltes Licht in eine Mehrzahl von Lichtleitkörpern eingekoppelt wird.

Gemäß einer weiteren Ausführungsform liegen die Verstärkungsfasern des Faserverbundwerkstoffbauteils in Form eines Faserbündels oder mehrerer Faserbündel vor. Weiterhin können die Verstärkungsfasern als Fasergelege, Fasergewebe, Fasergeflecht und/oder Fasergestick ausgeführt sein.

Gemäß einer weiteren Ausführungsform weist die Beleuchtungsvorrichtung zumindest ein Sensorelement zur Schaltung der Lichtquelle und/oder des Lichtleitkörpers bzw. der Lichtleitkörper auf. Vorzugsweise ist das Sensorelement im Faserverbundwerkstoffbauteil eingebettet. Beispielsweise kann das Sensorelement mit der Lichtquelle bzw. mit den Lichtquellen der Beleuchtungsvorrichtung und oder mit dem Lichtleitkörper bzw. den Lichtleitkörpern verbunden sein. Die Schaltung mittels des Sensorelements kann beispielsweise kapazitiv oder thermisch erfolgen. Dadurch ist es möglich, entweder mittels einer Berührung der Beleuchtungsvorrichtung oder alternativ berührungslos die Lichtquelle oder den Lichtleitkörper zu schalten. Durch eine Schaltung der Lichtquelle bzw. der Lichtquellen kann die Abstrahlung von Licht an- bzw. abgestellt und/oder die Lichtleistung der Lichtquelle bzw. Lichtquellen geändert werden. Durch eine Schaltung des Lichtleitkörpers bzw. der Lichtleitkörper kann die Transparenz des Lichtleitkörpers bzw. der Lichtleitkörper variiert werden, sodass die aus der Beleuchtungsvorrichtung austretende Lichtmenge verändert werden kann. Das Sensorelement kann beispielsweise mittels einer oder mehrerer der Verstärkungsfasern oder mittels einer oder mehrerer weiterer elektrisch leitfähiger Fasern mit der Lichtquelle bzw. den Lichtquellen oder dem Lichtleitkörper bzw. den Lichtleitkörpern verbunden sein.

Gemäß einer weiteren Ausführungsform bündelt der Lichtleitkörper mehrere Verstärkungsfasern. Beispielsweise können die Verstärkungsfasern von dem Lichtleitkörper geführt oder gerichtet werden. Der Lichtleitkörper kann z.B. eine Mehrzahl von Verstärkungsfasern umwickeln, vorzugsweise mittels einer Vielzahl von Wicklungen. Die von dem Lichtleitkörper gebündelten bzw. umwickelten Verstärkungsfasern können beispielsweise in Form eines Faserbündels vorliegen.

Gemäß einer weiteren Ausführungsform ist der Lichtleitkörper als Textilfaden ausgebildet. Der Textilfaden kann beispielsweise mehrere Bündel von Verstärkungsfasern fixieren und/oder umwickeln. Weiterhin kann der Textilfaden mehrere Gelege, die jeweils eine Vielzahl von Bündeln an Verstärkungsfasern aufweisen können, miteinander verbinden, wie z.B. durch Nähen oder Tuften.

Gemäß einer weiteren Ausführungsform sind die Verstärkungsfasern als Fasern in Prepreg ("preimpregnated fibres") ausgebildet, d.h. es handelt sich bei den Verstärkungsfasern um vorimprägnierte Fasern, insbesondere um mit Kunststoffmatrix vorimprägnierte Fasern.

Gemäß einer weiteren Ausführungsform weist die Beleuchtungsvorrichtung eine Mehrzahl von Lichtleitkörpern auf, wobei die Verteilung der Lichtleitkörper innerhalb des Faserverbundwerkstoffbauteils abhängig von der Verteidigung der Verstärkungsfasern ist. Vorzugsweise sind in Bereichen mit vielen Verstärkungsfasern mehr Lichtleitkörper vorgesehen als in Bereichen mit wenigen Verstärkungsfasern. Beispielsweise kann für jede Verstärkungsfaser ein Lichtleitkörper vorgesehen sein. Dabei können die jeweiligen Lichtleitkörper hinsichtlich ihrer Länge an die Länge der Verstärkungsfasern angepasst sein.

Gemäß einer weiteren Ausführungsform bilden zumindest einige der Verstärkungsfasern und/oder der bzw. die Lichtleitkörper durch ihre Anordnung ein bestimmtes Muster, ein Zeichen, wie z.B. ein Warenzeichen, eine Figur, ein Emblem, einen oder mehrere Buchstaben bzw. eine oder mehrere Zahlen oder einen oder mehrere Schriftzüge.

Die im Zusammenhang mit dem Lichtleitkörper beschriebenen Merkmale können gleichermaßen für eine Vielzahl von Lichtleitkörper gelten, die in der Beleuchtungsvorrichtung angeordnet sein können. Weiterhin kann die Beleuchtungsvorrichtung eine Vielzahl von Lichtquellen aufweisen, welche die im Zusammenhang mit der beschriebenen Lichtquelle genannten Merkmale aufweisen können.

Weitere Vorteile und vorteilhafte Ausführungsformen der hier beschriebenen Beleuchtungsvorrichtung ergeben sich aus den im Folgenden in Verbindung mit den Figuren 1A bis 5 beschriebenen Ausführungsformen. Es zeigen:
- Fig. 1A: eine schematische Darstellung einer Beleuchtungsvorrichtung gemäß einem ersten Ausführungsbeispiel, welche nicht unter den Gegenstand des Schutzbegehrens fallt,
- Fig. 1B: eine schematische Darstellung eines Lichtleitkörpers der Beleuchtungsvorrichtung aus Fig. 1A in einer weiteren Ansicht,
- Fig. 2 bis 4A: schematische Darstellungen von hier beschriebenen Beleuchtungsvorrichtungen in gemäß weiteren Ausführungsbeispielen, wovon Fig 3 nicht unter den Gegenstand des Schutzbegehrens fallt,
- Fig. 4B: eine schematische Darstellung der Beleuchtungsvorrichtung aus Figur 4A in einer weiteren Ansicht, und
- Fig. 5: eine schematische Darstellung einer Beleuchtungsvorrichtung mit einem mehrere Verstärkungsfasern bündelnden Lichtleitkörper gemäß einem weiteren Ausführungsbeispiel. rungsbeispiel, welche nicht unter den Gegenstand des Schutzbegehrens fallt.

In den Ausführungsbeispielen und Figuren können gleiche oder gleich wirkende Bestandteile jeweils mit den gleichen Bezugszeichen versehen sein. Die dargestellten Elemente und deren Größenverhältnisse untereinander sind grundsätzlich nicht als maßstabsgerecht anzusehen. Vielmehr können einzelne Elemente zur besseren Darstellbarkeit und/oder zum besseren Verständnis übertrieben dick oder groß dimensioniert dargestellt sein.

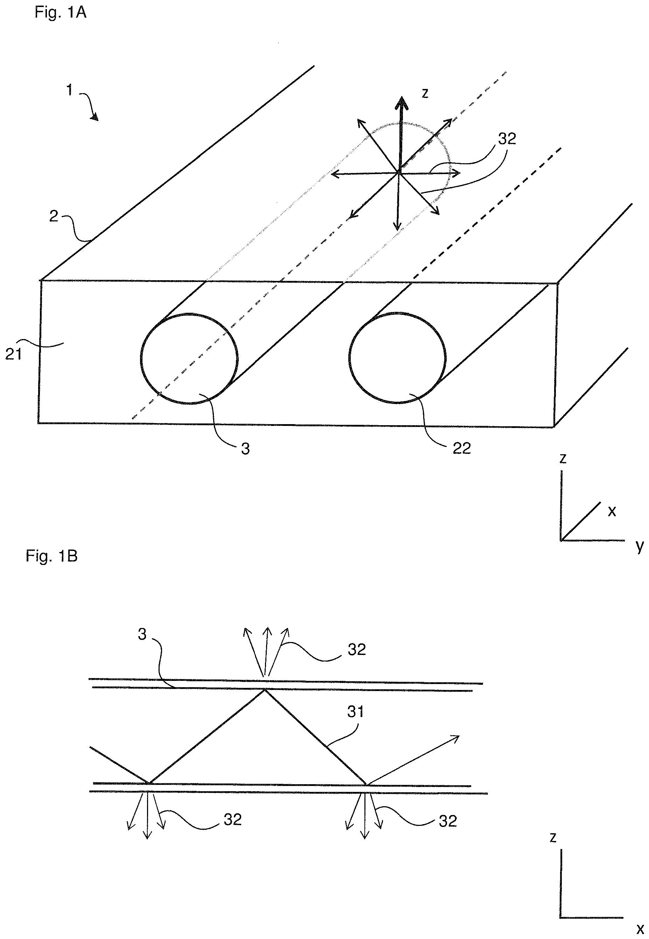

In den Figuren 1A bis 5 sind verschiedene Ausführungsbeispiele von Beleuchtungsvorrichtungen dargestellt. Zum besseren Verständnis ist in den Figuren jeweils ein Koordinatensystem mit den Raumachsen x, y, z eingezeichnet.

Figur 1 zeigt eine schematische Darstellung einer Beleuchtungsvorrichtung 1 gemäß einem ersten Ausführungsbeispiel. Ausführungsbeispiel, welche nicht unter den Gegenstand des Schutzbegehrens fallt.

Die Beleuchtungsvorrichtung 1 weist ein Faserverbundwerkstoffbauteil 2, eine Lichtquelle (nicht gezeigt) sowie einen Lichtleitkörper 3 auf. Das Faserverbundwerkstoffbauteil 2 umfasst eine Kunststoffmatrix 21 und eine Vielzahl von Verstärkungsfasern 22, von denen exemplarisch nur eine Verstärkungsfaser 22 eingezeichnet ist. Die Verstärkungsfasern 22 sind in der Kunststoffmatrix 21 vollständig eingebettet, das heißt die Kunststoffmatrix 21 umschließt die Verstärkungsfasern 22 vollständig. Im gezeigten Ausführungsbeispiel sind die Verstärkungsfasern 22 als Carbonfasern ausgeführt. Alternativ können die Verstärkungsfasern beispielsweise auch als Aramidfasern oder Glasfasern ausgebildet sein. Bei der Kunststoffmatrix 21 handelt es sich im gezeigten Ausführungsbeispiel um einen thermoplastischen Kunststoff. Alternativ kann die Kunststoffmatrix 21 z.B. auch aus einem duroplastischen Kunststoff bestehen.

Der Lichtleitkörper 3 weist wenigstens eine Lichteinleitungsfläche auf, mit der Licht, das aus der Lichtquelle abgestrahlt wird, in den Lichtleitkörper eingekoppelt werden kann. Weiterhin weist der Lichtleitkörper 3 eine Lichtaustrittsfläche auf, mit der das in den Lichtleitkörper eingekoppelte Licht wieder ausgekoppelt werden kann. Der Lichtleitkörper 3 ist in der Kunststoffmatrix 21 des Faserverbundwerkstoffbauteils 2 eingebettet. Vorzugsweise umschließt die Kunststoffmatrix 21 zumindest in lateraler Richtung vollständig den Lichtleitkörper 3. Im gezeigten Ausführungsbeispiel ist der Lichtleitkörper 3 als Glasfaser, insbesondere als Seitenlichtfaser, ausgeführt. Alternativ kann der Lichtleitkörper 3 beispielsweise auch als Glasfaserbündel ausgebildet sein. Weiterhin kann der Lichtleitkörper 3 eine oder mehrere Polymerfasern aufweisen oder beispielsweise aus einem Kunststoff, wie z.B. aus Polycarbonat oder aus Polymethylmethacrylat, bestehen. Des Weiteren ist es möglich, dass die Beleuchtungsvorrichtung 1 eine Vielzahl von Lichtleitkörpern 3, die in der Kunststoffmatrix 21 des Faserverbundwerkstoffbauteils 2 eingebettet sind, aufweist. Das Faserverbundwerkstoffbauteil 2 ist für Licht, das aus der Lichtaustrittsfläche des Lichtleitkörpers 3 ausgekoppelt wird, zumindest teilweise Licht durchlässig. Im gezeigten Ausführungsbeispiel wird aus dem Lichtleitkörper 3 austretendes Licht 32 radial zu einer Längsachse des Lichtleitkörpers 3 ausgekoppelt.

In der Figur 1B ist der Lichtleitkörper 3 aus der Figur 1A in einer weiteren schematischen Darstellung gezeigt, wobei eine Aufsicht auf die x-z-Ebene dargestellt ist. Von der Lichtquelle (nicht gezeigt) abgestrahltes und in den Lichtleitkörper 3 eingekoppeltes Licht 31 wird entlang des Lichtleitkörpers 3, beispielsweise entlang der Haupterstreckungsrichtung des Lichtleitkörpers 3, ausgekoppelt. In anderen Worten erstreckt sich die Lichtaustrittsfläche in axialer Richtung entlang der Haupterstreckungsrichtung des Lichtleitkörpers 3. Beispielsweise kann der Lichtleitkörper 3 Mittel zur Lichtauskopplung entlang der Haupterstreckungsrichtung aufweisen. Die Mittel zur Lichtauskopplung können z.B. als eine definierte Oberflächenstrukturierung, wie beispielsweise aufgeraute Bereiche oder Mikroprismen, oder als in den Lichtleitkörper 3 eingebettete Streupartikel ausgebildet sein. Das ausgekoppelte Licht ist in der Figur 1B mit dem Bezugszeichen 32 versehen. Das Faserverbundwerkstoffbauteil 2 ist für das ausgekoppelte Licht 32 zumindest teilweise transluzent.

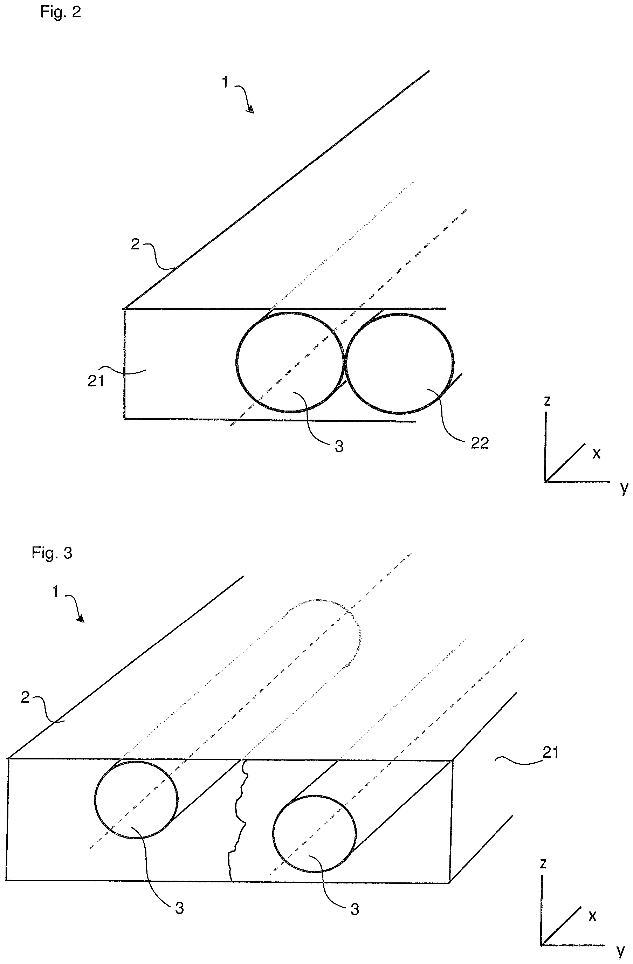

Die Figur 2 zeigt eine Beleuchtungsvorrichtung 1 gemäß einem weiteren Ausführungsbeispiel. Das Faserverbundwerkstoffbauteil 2, die Kunststoffmatrix 21, die Verstärkungsfasern 22 sowie der Lichtleitkörper 3 können beispielsweise wie im Zusammenhang mit den Figuren 1A und 1B beschrieben ausgebildet sein. Im Unterschied zu dem in den Figuren 1A und 1B gezeigten Ausführungsbeispiel steht der Lichtleitkörper 3 zumindest bereichsweise mit wenigstens einer der Verstärkungsfasern 22 in Berührung. Dadurch kann vorteilhafterweise erreicht werden, dass die mit dem Lichtleitkörper 3 in Berührung stehende Verstärkungsfaser 22 besonders deutlich nach außen hin sichtbar gemacht werden kann. Weiterhin kann der Lichtleitkörper 3 mit einer weiteren oder einer Vielzahl an weiteren Verstärkungsfasern 22 zumindest bereichsweise in Berührung stehen. Darüber hinaus kann die Beleuchtungsvorrichtung 1 weitere Lichtleitkörper 3 aufweisen, die mit einer oder mehreren Verstärkungsfasern 22 in Berührung stehen.

In der Figur 3 ist eine Beleuchtungsvorrichtung 1 gemäß einem weiteren Ausführungsbeispiel, welche nicht unter den Gegenstand des Schutzbegehrens fallt, dargestellt, wobei durch die Figur 3 verdeutlicht werden soll, dass der Lichtleitkörper 3 entweder oberflächennah im Faserverbundwerkstoffbauteil 2 angeordnet sein kann oder alternativ weiter von der Oberfläche des Faserverbundwerkstoffbauteils 2 entfernt im Faserverbundwerkstoffbauteil 2 eingebettet sein kann. Weiterhin kann der Lichtleitkörper 3 lediglich bereichsweise oberflächennah im Faserverbundwerkstoffbauteil 2 angeordnet sein. Es ist auch möglich, dass ein oder mehrere Lichtleitkörper 3 oberflächennah im Faserverbundwerkstoffbauteil 2 angeordnet sind, und gleichzeitig ein oder mehrere Lichtleitkörper 3 weiter von der Oberfläche des Faserverbundwerkstoffbauteils 2 beabstandet im Faserverbundwerkstoffbauteil 2 eingebettet sind. Wesentlich in Bezug auf die Anordnung des Lichtleitkörpers 3 bzw. der Lichtleitkörper 3 im Faserverbundwerkstoffbauteil 2 ist jedoch, dass das Faserverbundwerkstoffbauteil 2 für Licht, das aus der bzw. aus den Lichtaustrittsflächen des Lichtleitkörpers bzw. der Lichtleitkörper 3 ausgekoppelt wird, zumindest teilweise transluzent ist. Daher kann der Lichtleitkörper 3 bei Verwendung einer transparenten Kunststoffmatrix 21 weiter von der Oberfläche des Faserverbundwerkstoffbauteils 2 beabstandet sein als bei der Verwendung einer weniger transparenten bzw. opaken Kunststoffmatrix 21. Beispielsweise keiner der Lichtleitkörper 3 bei Verwendung einer transparenten Kunststoffmatrix 21 einen Abstand größer als 0,5 mm zur Oberfläche des Faserverbundwerkstoffbauteils 2 aufweisen. Bei Verwendung einer opaken Kunststoffmatrix 21 weist der Lichtleitkörper 3 vorzugsweise einen Abstand kleiner als 0,5 mm zur Oberfläche des Faserverbundwerkstoffbauteils 2 auf. Vorzugsweise ist der Lichtleitkörper 3 derart in der Kunststoffmatrix 21 eingebettet, dass mindestens 5 % der Strahlungsenergie des in den Lichtleitkörper 3 eingekoppelten Lichts 31 durch die Kunststoffmatrix 21 hindurch aus dem Faserverbundwerkstoffbauteil 2 austritt.

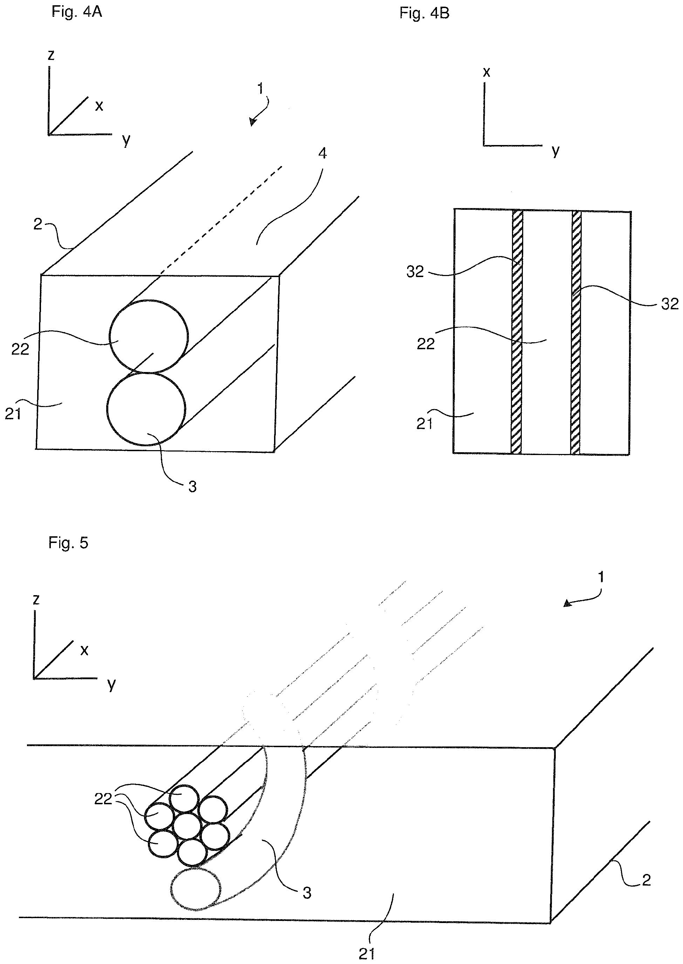

Die Figuren 4A und 4B zeigen eine Beleuchtungsvorrichtung 1 gemäß einem weiteren Ausführungsbeispiel. Dabei ist der Lichtleitkörper 3 derart im Faserverbundwerkstoffbauteil 2 eingebettet, dass er zumindest bereichsweise von einer Sichtoberfläche 4 der Beleuchtungsvorrichtung 1 aus gesehen von einer der Verstärkungsfasern 22 verdeckt wird. Vorzugsweise erstreckt sich der Lichtleitkörper 3 über seine gesamte Länge entlang der Verstärkungsfaser 22 und wird, von der Sichtoberfläche 4 aus gesehen, dabei größtenteils von der Verstärkungsfaser 22 verdeckt. Dadurch kann, wie in der Figur 4B zu erkennen ist, die eine Aufsicht auf die x-y-Ebene
und damit eine Aufsicht auf die Sichtoberfläche 4 zeigt, vorteilhafterweise erreicht werden, dass die den Lichtleitkörper 3 überdeckende Verstärkungsfaser 22 eindrucksvoll nach außen hin sichtbar gemacht werden kann, da vom Lichtleitkörper 3 ausgekoppeltes Licht 32 die Außenkontur der Verstärkungsfaser 22 besonders gut verdeutlicht.

In der Figur 5 ist ein weiteres Ausführungsbeispiel, welche nicht unter den Gegenstand des Schutzbegehrens fallt, einer Beleuchtungsvorrichtung 1 gezeigt, bei der der Lichtleitkörper 3, der als lichtleitende Faser ausgebildet ist, eine Mehrzahl von Verstärkungsfasern 22, die in Form eines Faserbündels vorliegen, bündelt. Dadurch können die Verstärkungsfasern 22 durch den Lichtleitkörper 3 geführt bzw. ausgerichtet werden. Der Lichtleitkörper 3 ist dabei derart im Faserverbundwerkstoffbauteil 2 angeordnet, dass er die Verstärkungsfasern 22 mehrfach umwickelt. Auch bei diesem Ausführungsbeispiel können die im Faserverbundwerkstoffbauteil 2 eingebetteten und Form Lichtleitkörper 3 umwickelten Verstärkungsfaser 22 besonders eindrucksvoll nach außen hin sichtbar gemacht werden.

### Bezugszeichenliste

- 1: Beleuchtungsvorrichtung
- 2: Faserverbundwerkstoffbauteil
- 21: Kunststoffmatrix
- 22: Verstärkungsfasern
- 3: Lichtleitkörper
- 31: Lichtstrahl
- 32: ausgekoppeltes Licht
- 4: Sichtoberfläche

## Patentansprüche

1. Beleuchtungsvorrichtung (1), welche ein Fahrzeugbauteil ist, aufweisend
- ein Faserverbundwerkstoffbauteil (2), das eine Kunststoffmatrix (21) und eine Vielzahl von Verstärkungsfasern (22), die in der Kunststoffmatrix (21) eingebettet sind, umfasst, wobei die Verstärkungsfasern (22) Carbonfasern sind,
- zumindest eine Lichtquelle, und
- zumindest einen Lichtleitkörper (3), der wenigstens eine Lichteinleitungsfläche zur Einkopplung von aus der Lichtquelle abgestrahltem Licht und wenigstens eine Lichtaustrittsfläche zur Lichtauskopplung aufweist,
- wobei der Lichtleitkörper (3) in der Kunststoffmatrix (21) des Faserverbundwerkstoffbauteils (2) eingebettet ist, wobei das Faserverbundwerkstoffbauteil (2) für Licht, das aus der Lichtaustrittsfläche ausgekoppelt wird, zumindest teilweise transluzent ist, und
- wobei der Lichtleitkörper (3) derart im Faserverbundwerkstoffbauteil (2) eingebettet ist, dass er mit zumindest einer der Verstärkungsfasern (22) über wenigstens die Hälfte ihrer Länge in Berührung steht.

2. Beleuchtungsvorrichtung nach Anspruch 1, wobei die Lichtaustrittsfläche zumindest teilweise von Material der Kunststoffmatrix (21) bedeckt ist.

3. Beleuchtungsvorrichtung nach einem der Ansprüche 1 oder 2, wobei sich die Lichtaustrittsfläche entlang einer Haupterstreckungsrichtung des Lichtleitkörpers (3) erstreckt.

4. Beleuchtungsvorrichtung nach einem der vorhergehenden Ansprüche, wobei das Verhältnis von Lichtaustrittsfläche zur Lichteinleitungsfläche mindestens 10 beträgt.

5. Beleuchtungsvorrichtung nach einem der vorhergehenden Ansprüche, wobei zumindest eine Lichtaustrittsfläche des Lichtleitkörpers (3) senkrecht zur Lichteinleitungsfläche des Lichtleitkörpers steht.

6. Beleuchtungsvorrichtung nach einem der vorhergehenden Ansprüche, wobei der Lichtleitkörper (3) als lichtleitende Faser oder als lichtleitendes Faserbündel ausgebildet ist.

7. Beleuchtungsvorrichtung nach einem der vorhergehenden Ansprüche, wobei der Lichtleitkörper (3) aus einem Kunststoff, wie z.B. aus Polycarbonat oder aus Polymethylmethacrylat, oder aus Glas, insbesondere aus einer oder mehreren Glasfasern, besteht.

8. Beleuchtungsvorrichtung nach einem der vorhergehenden Ansprüche, wobei die Lichtquelle im Faserverbundwerkstoffbauteil (2) eingebettet ist.

9. Beleuchtungsvorrichtung nach einem der Ansprüche 1 bis 7, wobei die Lichtquelle außerhalb des Faserverbundwerkstoffbauteils (2) angeordnet ist.

10. Beleuchtungsvorrichtung nach einem der vorhergehenden Ansprüche, aufweisend eine Vielzahl von Lichtleitkörpern (3), die in der Kunststoffmatrix (21) des Faserverbundwerkstoffbauteils (2) eingebettet sind.

11. Beleuchtungsvorrichtung nach einem der vorhergehenden Ansprüche, wobei die Verstärkungsfasern (22) in Form eines Faserbündels oder mehrerer Faserbündel vorliegen.

12. Beleuchtungsvorrichtung nach einem der vorhergehenden Ansprüche, wobei die Verstärkungsfasern (22) als Fasergelege, Fasergewebe, Fasergeflecht und/oder Fasergestick ausgeführt sind.

13. Beleuchtungsvorrichtung nach einem der vorhergehenden Ansprüche, aufweisend zumindest ein im Faserverbundwerkstoffbauteil (2) eingebettetes Sensorelement zur Schaltung des Lichtleitkörpers (3).

14. Beleuchtungsvorrichtung nach einem der vorhergehenden Ansprüche, wobei der Lichtleitkörper (3) mehrere Verstärkungsfasern (22) bündelt und/oder als Stickfaden oder Textilfaden ausgebildet ist.

15. Beleuchtungsvorrichtung nach einem der vorhergehenden Ansprüche, wobei es sich bei den Verstärkungsfasern (22) um vorimprägnierte Fasern handelt.

## Claims

1. Illumination device (1), which is a vehicle component, having
- a fibre-composite material component (2) which comprises a plastics matrix (21) and a multiplicity of reinforcement fibres (22) which are embedded in the plastics matrix (21), wherein the reinforcement fibres (22) are carbon fibres;
- at least one light source; and
- at least one light-conducting body (3) which has at least one light-introduction face for coupling in light that is emitted from the light source, and at least one light-exit face for decoupling light;
- wherein the light-conducting body (3) is embedded in the plastics matrix (21) of the fibre-composite material component (2), wherein the fibre-composite material component (2) is at least partially translucent to light which is decoupled from the light-exit face; and
- wherein the light-conducting body (3) is embedded in the fibre-composite material component (2) in such a manner that said light-conducting body (3) is in contact with at least one of the reinforcement fibres (22) over at least half the length of the latter.

2. Illumination device according to Claim 1, wherein the light-exit face is at least partially covered by material of the plastics matrix (21).

3. Illumination device according to either of Claims 1 and 2, wherein the light-exit face extends along a main direction of extent of the light-conducting body (3).

4. Illumination device according to one of the preceding claims, wherein the light-exit face to light-introduction face ratio is at least 10.

5. Illumination device according to one of the preceding claims, wherein at least one light-exit face of the light-conducting body (3) is perpendicular to the light-introduction face of the light-conducting body.

6. Illumination device according to one of the preceding claims, wherein the light-conducting body (3) is configured as a fibre optics or as a fibre optics bundle.

7. Illumination device according to one of the preceding claims, wherein the light-conducting body (3) is composed of a plastics material such as, for example, polycarbonate, or of polymethyl methacrylate, or of glass, in particular of one or a plurality of glass fibres.

8. Illumination device according to one of the preceding claims, wherein the light source is embedded in the fibre-composite material component (2) .

9. Illumination device according to one of Claims 1 to 7, wherein the light source is disposed outside the fibre-composite material component (2).

10. Illumination device according to one of the preceding claims, having a multiplicity of light-conducting bodies (3) which are embedded in the plastics matrix (21) of the fibre-composite material component (2).

11. Illumination device according to one of the preceding claims, wherein the reinforcement fibres (22) are present in the form of one fibre bundle or of a plurality of fibre bundles.

12. Illumination device according to one of the preceding claims, wherein the reinforcement fibres (22) are embodied as a fibrous scrim, fibrous woven fabric, fibrous braiding and/or fibrous embroidery.

13. Illumination device according to one of the preceding claims, having at least one sensor element for switching the light-conducting body (3), said sensor element being embedded in the fibre-composite material component (2).

14. Illumination device according to one of the preceding claims, wherein the light-conducting body (3) bundles a plurality of reinforcement fibres (22) and/or is configured as an embroidery thread or a textile thread.

15. Illumination device according to one of the preceding claims, wherein the reinforcement fibres (22) are pre-impregnated fibres.

## Revendications

1. Dispositif d'éclairage (1), qui constitue un élément structurel de véhicule, comportant
- un élément structurel en matériau composite à fibres (2) comprenant une matrice en matière plastique (21) et une pluralité de fibres de renforcement (22) qui sont enrobées dans la matrice en matière plastique (21), dans lequel les fibres de renforcement (22) sont des fibres de carbone,
- au moins une source de lumière, et
- au moins un corps de guidage de lumière (3) qui comporte au moins une surface d'introduction de lumière destinée à l'injection de la lumière rayonnée depuis la source de lumière et au moins une surface de sortie de lumière destinée à l'extraction de la lumière,
- dans lequel le corps de guidage de lumière (3) est enrobé dans la matrice en matière plastique (21) de l'élément structurel en matériau composite à fibres (2), dans lequel l'élément structurel en matériau composite à fibres (2) est au moins partiellement translucide pour la lumière qui est extraite de la surface de sortie de lumière, et
- dans lequel le corps de guidage de lumière (3) est enrobé dans l'élément structurel en matériau composite à fibres (2) de telle sorte qu'il soit en contact avec au moins l'une des fibres de renforcement (22) sur au moins la moitié de sa longueur.

2. Dispositif d'éclairage selon la revendication 1, dans lequel la surface de sortie de lumière est au moins partiellement recouverte par du matériau de la matrice en matière plastique (21).

3. Dispositif d'éclairage selon l'une des revendications 1 ou 2, dans lequel la surface de sortie de lumière s'étend suivant une direction principale d'extension du corps de guidage de lumière (3).

4. Dispositif d'éclairage selon l'une des revendications précédentes, dans lequel le rapport de la surface de sortie de lumière à la surface d'introduction de lumière est au moins égal à 10.

5. Dispositif d'éclairage selon l'une des revendications précédentes, dans lequel au moins une surface de sortie de lumière du corps de guidage de lumière (3) est perpendiculaire à la surface d'introduction de lumière du corps de guidage de lumière.

6. Dispositif d'éclairage selon l'une des revendications précédentes, dans lequel le corps de guidage de lumière (3) est réalisé sous la forme d'une fibre optique ou d'un faisceau de fibres optiques.

7. Dispositif d'éclairage selon l'une des revendications précédentes, dans lequel le corps de guidage de lumière (3) est constitué d'une matière plastique, telle que du polycarbonate ou du polyméthacrylate de méthyle, ou de verre, notamment d'une ou de plusieurs fibres de verre.

8. Dispositif d'éclairage selon l'une des revendications précédentes, dans lequel la source de lumière est enrobée dans l'élément structurel en matériau composite à fibres (2).

9. Dispositif d'éclairage selon l'une des revendications 1 à 7, dans lequel la source de lumière est disposée à l'extérieur de l'élément structurel en matériau composite à fibres (2).

10. Dispositif d'éclairage selon l'une des revendications précédentes, comportant une pluralité de corps de guidage de lumière (3) qui sont enrobés dans la matrice en matière plastique (21) de l'élément structurel en matériau composite à fibres (2).

11. Dispositif d'éclairage selon l'une des revendications précédentes, dans lequel les fibres de renforcement (22) se présentent sous la forme d'un faisceau de fibres ou de plusieurs faisceaux de fibres.

12. Dispositif d'éclairage selon l'une des revendications précédentes, dans lequel les fibres de renforcement (22) sont réalisées sous la forme d'une nappe de fibres, d'un tissu de fibres, d'un treillis de fibres et/ou d'une broderie de fibres.

13. Dispositif d'éclairage selon l'une des revendications précédentes, comportant au moins un élément capteur enrobé dans l'élément structurel en matériau composite à fibres (2) pour la commutation du corps de guidage de lumière (3).

14. Dispositif d'éclairage selon l'une des revendications précédentes, dans lequel le corps de guidage de lumière (3) regroupe plusieurs fibres de renforcement (22) et/ou est réalisé sous la forme de fils de broderie ou de fils textiles.

15. Dispositif d'éclairage selon l'une des revendications précédentes, dans lequel les fibres de renforcement (22) sont des fibres pré-imprégnées.
